# EUROPÄISCHE PATENTSCHRIFT

(11) **EP 0 873 650 B1**
(45) Veröffentlichungstag und Bekanntmachung des Hinweises auf die Patenterteilung: **25.08.1999**
(21) Anmeldenummer: 97915254.3
(22) Anmeldetag: 10.01.1997
(51) Int. Cl.: H04N 5/45

(54) **SCHALTUNGSANORDNUNG ZUR FARBDECODIERUNG UND -DEZIMIERUNG FÜR EIN VIDEOSIGNAL**
CIRCUIT FOR COLOR DECODING AND COLOR DECIMATION OF A VIDEO SIGNAL
CIRCUIT POUR LE DECODAGE ET LA DECIMATION DE CHROMINANCE D'UN SIGNAL VIDEO

(30) Priorität: 12.01.1996 DE 19600963
(43) Veröffentlichungstag der Anmeldung: 28.10.1998
(73) Patentinhaber: SIEMENS AKTIENGESELLSCHAFT, 80333 München (DE)
(72) Erfinder: PRANGE, Stefan, D-81476 München (DE)
(86) Internationale Anmeldenummer: DE9700034
(87) Internationale Veröffentlichungsnummer: WO9725814

(56) Entgegenhaltungen:
- PROCEEDINGS OF THE INTERNATIONAL CONFERENCE ON CONSUMER ELECTRONICS (ICCE), ROSEMONT, JUNE 5 - 7, 1991, Nr. CONF. 10, 5.Juni 1991, INSTITUTE OF ELECTRICAL AND ELECTRONICS ENGINEERS, Seiten 64-65, XP000288208 RUMREICH M: "PIX-IN-PIX IC WITH DIGITAL DECODING/ENCODING USING ONLY ONE CLOCK"
- ELECTRONIQUE RADIO PLANS, Nr. 535, 1.Juni 1992, Seiten 81-90, XP000304719 DE DIEULEVEULT F: "UN ENSEMBLE P.I.P APPLICATION DES CIRCUITS ITT DIGIT 2000"
- FERNSEH & KINO TECHNIK, Nr. 4, April 1986, Seiten 141-146, XP002034370 TON NILLESEN: "Digitaler TV-Farbdecoder mit Zeilenfrequenzverkopplung"

## Beschreibung

Die Erfindung betrifft eine Schaltungsanordnung zur Farbdecodierung und -dezimierung für ein Videosignal. Eine derartige Schaltungsanordnung ist insbesondere zur Einblendung eines dezimierten Bildes in ein Hauptbild, sogenannte Bild-im-Bildeinblendung, geeignet.

Bei der Bild-im-Bildeinblendung ist erforderlich, daß das einzublendende Bild von seiner ursprünglichen, empfangenen Größe auf die einzublendende Bildgröße verkleinert, d. h. dezimiert, wird. Außerdem werden bei der Bildverarbeitung zweckmäßigerweise Helligkeits- und Farbsignalanteile getrennt verarbeitet. Empfangsseitig sind diese Signalanteile im Videosignal kombiniert. Die Gewinnung des Luminanz- und der beiden Chrominanzsignalanteile aus dem Videosignal, d. h. die Farbdecodierung, wird vor der Dezimierung durchgeführt.

In der Siemens-Produktbeschreibung "ICS for Entertainment Electronics; Picture-in-Picture System", Ausgabe 5/91, insbesondere Seite 8 und Seiten 42 - 43, ist eine bekannte Schaltungsanordnung zur Bild-im-Bildeinblendung beschrieben. Ein digital arbeitender Farbdecoder erzeugt ein digitales Luminanzsignal Y und zwei digitale Chrominanzsignale U, V, die einem Bild-im-Bildprozessor zugeführt werden. Dieser enthält eingangseitig eine Dezimierungseinrichtung, durch die das einzublendende Bild bezüglich der Größe dezimiert wird. Das dezimierte Bild wird anschließend in einem Bildspeicher zwischengespeichert. Als Farbdecoder wird ein handelsüblich verfügbarer Baustein vorgeschlagen, der nicht notwendigerweise auf die spezielle Anwendung der Bild-im-Bildeinblendung angepaßt ist. Der Dezimierungseinrichtung werden deshalb eingangsseitig die Signalkomponenten Y, U, V mit der jeweils größtmöglichen Signalbandbreite zugeführt. Zur Dezimierung wird für jeden Signalanteil eine horizontale und vertikale Mittelung von Bildpunkten durchgeführt. Für eine Bildverkleinerung um den Faktor 1/9 werden 9 Bildpunkte zu einem einzigen Bildpunkt für das einzublendende Bild gemittelt.

Durch die Dezimierung mittels Mittelwertbildung wird die Abtastwerterate des einzublendenden Bildes verringert. Um das Abtast/Nyquist-Theorem auch nach der Dezimierung zu erfüllen, so daß Störeffekte im dezimierten Bild verhindert werden, ist eine entsprechende Bandbegrenzung der zu dezimierenden Signalanteile erforderlich. Hierzu umfaßt die Mittelwertbildung eine zusätzliche Tiefpaßfilterung. Deren Durchlaßbereich ist jedoch derart unscharf begrenzt, daß das dezimierte Bild trotzdem Störeffekte beinhaltet.

Ein Beispiel für einen herkömmlichen digitalen Farbdecoder ist in Fernseh- und Kino-Technik, Ton Nillesen: "Digitaler TV-Farbdecoder mit Zeilenfrequenzverkopplung", Nr. 4/1986, Seiten 141 bis 146 beschrieben. Um die Bandbreite der farbdecodierten Ausgangssignale Y, U, V möglichst groß zu halten, weist der Farbdecoder ausgangsseitig hochwertige Filter auf, nämlich je ein Tiefpaßfilter im Pfad der Chrominanzsignale, durch die die jeweiligen Mischprodukte bei Vielfachen der Trägerfrequenz ausgefiltert werden, und ein Kerbfilter im Zweig des Luminanzsignalanteils, durch das der Farbträger ausgefiltert wird. Der Schaltungsaufwand für das gesamte Bild-im-Bildsystem ist somit relativ hoch, zumal er eine relativ große Auzahl von Filtern enthält. Eine vollständig integrierte Realisierung eines Farbdecoders und eines Bildim-Bildprozessors auf einem einzigen integrierten Schaltungschip wäre entsprechend aufwendig. Ein vergleichbares Bildim-Bildsystem ist ebenfalls aus "Electronique radio plans, No. 535, 1 June 1992, pages 81-90", bekannt. Ein ähnlicher Schaltungsaufbau kann auch der Zeitschriff "Fernseh-und Kino Technik", Nr. 4, April 1986, Seiten 141-146 entnommen werden.

Die Aufgabe der Erfindung besteht darin, diese Nachteile zu vermeiden. Insbesondere soll eine kombinierte Schaltungsanordnung zur Farbdecodierung und Dezimierung angegeben werden, die möglichst wenige Funktionsblöcke und somit einen geringen Schaltungsaufwand aufweist.

Diese Aufgabe wird erfindungsgemäß durch eine Schaltungsanordnung nach den Merkmalen des Patentanspruchs 1 gelöst.

Eine Fernsehgerät, das eine Schaltungsanordnung gemäß der Erfindung zur Bild-im-Bildeinblendung enthält, ist in Patentanspruch 10 angegeben.

Bei der Erfindung werden die für die Fardecodierung und die für die Dezimierung erforderlichen Filter zusammengefaßt. Ein Kerbfilter im Luminanzpfad ist bei der Schaltungsanordnung nach der Erfindung nicht erforderlich, da bei der Dezimierung das für die Bandbegrenzung erforderliche Tiefpaßfilter im Luminanzpfad ohnehin eine Bandbreitenbegrenzung bis unterhalb des Farbträgers durchführt. Darüber hinaus sind im Farbdecoder die Tiefpaßfilter zur Unterdrückung der Modulationsprodukte bei Vielfachen der Trägerfrequenz nicht mehr gesondert notwendig. Die entsprechende Tiefpaßfilterung wird von den ohnehin für die Dezimierung vorgesehenen Tiefpaßfiltern bewirkt. Zweckmäßigerweise unterdrückt das Tiefpaßfilter im Luminanzpfad mindestens die dort enthaltenen Chrominanzanteile.

Da das menschliche Auge für Farbe eine wesentlich geringere Empfindlichkeit aufweist als für Helligkeit, weisen die Farbsignalanteile üblicherweise eine niedrigere Abtastrate auf. Die Tiefpaßfilter in den Chrominanzsignalpfaden weisen deshalb entsprechend kleinere Durchlaßbereiche auf. Bei einem Darstellungsformat von Y:U:V von 4:1:1 für die nachfolgende Zwischenspeicherung genügt es, daß die Durchlaßbereiche der Tiefpaßfilter in den Chrominanzpfaden nur ein Viertel des Durchlaßbereichs des Tiefpaßfilters im Luminanzpfad aufweisen. Wenn das einzublendende Bild auf 1/N² seiner ursprünglichen Bildgröße dezimiert werden soll, erfordert dies, daß die Abtastwerterate im Luminanzpfad auf 1/N² der ursprünglichen Abtastwerterate verringert wird und die Abtastwerterate in den Chrominanzsignalpfaden jeweils auf 1/4N² der ursprünglichen Abtastrate. Die Tiefpaßfilter, die als horizontale Tiefpässe wirken, sind zur horizontalen Dezimierung derart ausgeführt, daß entweder nur 1/N der ausgangsseitigen Abtastwerte berechnet wird oder von den tiefpaßgefilterten Abtastwerten nur jeder N-te Wert der weiteren Verarbeitung zugeführt wird. Zur vertikalen Dezimierung wird nur jede N-te Zeile weiterverarbeitet.

Mittels Kammfiltern wird die Trennung von Chrominanz- und Luminanzsignalanteilen im einzublendenden Bild verbessert und Übersprechen verringert. Kammfilter sind besonders vorteilhaft in den Chrominanzsignalpfaden, wo sie ausgangsseitig nach der Unterabtastung der horizontalen Tiefpässe angeordnet sind. Zusätzlich kann ein Kammfilter im Luminanzpfad ausgangsseitig angeordnet werden, um hochfrequente Chrominanzanteile in der Luminanz zu unterdrücken. Kammfilter sind bekanntlich vertikal wirkende Tiefpaßfilter, deren Verzögerungsglieder bei digitaler Realisierung jeweils um die Dauer einer Bildzeile verzögern. Zur vertikalen Dezimierung um 1/N wird zweckmäßigerweise nur jede N-te Zeile durch die Kammfilter berechnet.

Die Farbträgerrückgewinnung kann vorteilhafterweise frequenzgekoppelt an den Farbträger durchgeführt werden. Die Abtastung im A/D-Wandler erfolgt dabei mit dem Vierfachen der Farbträgerfrequenz. Die Abtastwerte für den Farbträger ergeben sich dann logischerweise zu +1, 0, -1 (normiert auf die Farbträgeramplitude). Die Mischung der Farbsignalanteile im kombinierten Videosignal in das Basisband, die üblicherweise durch eine Multipliziereinrichtung, der das Videosignal und die Farbträger um 90° phasenverschoben zugeführt werden, durchgeführt wird, vereinfacht sich entsprechend. Sie enthält dann eine Vorzeichenwechseleinrichtung, die mit der doppelten Farbträgerfrequenz taktgesteuert wird, und einen Umschalter zwischen dem ersten und dem zweiten Farbsignalpfad, der mit dem Vierfachen der Farbträgerfrequenz taktgesteuert wird.

Durch die sich in der erfindungsgemäßen Schaltungsanordnung ergebenden Vereinfachungen und Einsparungen bei der kombinierten Farbdecodierung und -dezimierung gegenüber einer herkömmlichen Lösung mit Stand-alone-Bauelementen ist eine Integration von Farbdecoder und Bild-im-Bildprozessor auf einem einzigen integrierten Schaltungschip im Hinblick auf den Flächenverbrauch ohne weiteres möglich.

Nachfolgend wird die Erfindung anhand der in den Figuren dargestellten Ausführungsbeispiele näher erläutert. Es zeigen:
- Figur 1: eine erfindungsgemäße Schaltungsanordnung zur Farbdecodierung und -dezimierung eines Videosignals,
- Figur 2: eine Vereinfachung der Farbträgerrückgewinnung bei trägergekoppelter Decodierung,
- Figur 3: ein Frequenzspektrum eines Videosignals einschließlich einer Frequenzcharakteristik für das Tiefpaßfilter im Lumimanzkanal,
- Figur 4: den Verlauf der Farbträger in einer Zeile eines Videosignals gemäß dem PAL-Farbstandard und
- Figur 5: ein ideales Spektrum eines PAL-Videosignals und Kammfiltercharakteristiken für Luminanz und Chrominanz.

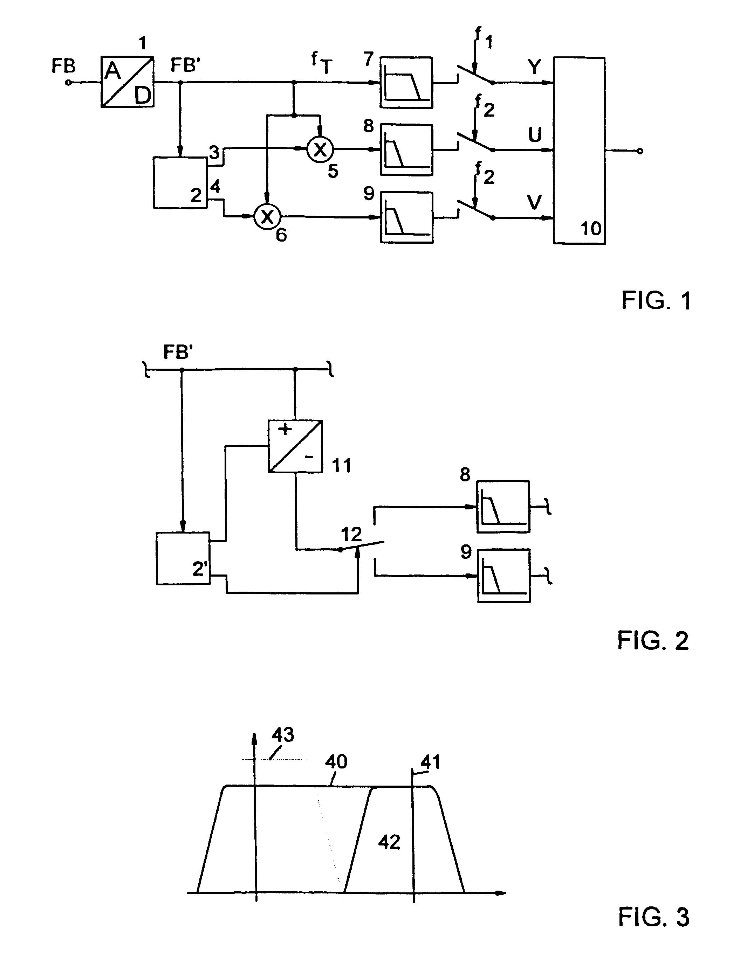

In der Schaltungsanordnung gemäß Figur 1 wird einem Analog-Digital-Wandler 1 ein Videosignal FB zugeführt, dessen Frequenzcharakteristik in Figur 3 dargestellt ist. Das Signal FB enthält einen Luminanzsignalanteil 40, sowie einen asymmetrisch um den Farbträger 41 angeordneten Chrominanzsignalanteil 42. Nach der A/D-Wandlung liegt das digitalisierte Videosignal FB' vor. In einer Einrichtung 2 wird aus dem digitalisierten Videosignal FB' der Farbträger zurückgewonnen und an deren Anschlüssen 3, 4 um 90° zueinander phasenverschoben bereitgestellt. Alternativ kann der Farbträger auch aus dem analogen Videosignal FB mit anschließender Digitalisierung rekonstruiert werden. In jeweiligen Multipliziereinrichtungen 5, 6 wird das digitalisierte Videosignal FB' mit den orthogonalen Farbträgern gemischt. Das digitalisierte Videosignal FB' wird einem ersten Tiefpaß 7 zugeführt, an dessen Ausgang ein tiefpaßgefiltertes Luminanzsignal vorliegt. Die von den Multipliziern 5, 6 abgegebenen Mischprodukte werden über ein zweites bzw. drittes Tiefpaßfilter 8 bzw. 9 gefiltert. Anschließend erfolgt eine Unterabtastung der gefilterten Luminanz- und Chrominanzsignalanteile Y, U, V. Für vier Abtastwerte des Luminanzsignals Y liegt je ein Abtastwert der Chrominanzsignale U, V vor (M = 4). Für die jeweilige Unterabtastung gilt f₁ = 4 f₂. Die Unterabtastung kann dadurch bewirkt werden, daß durch die Filter 7, 8, 9 entweder jeweils nur die Abtastwerte in der erforderlichen Abtastwerterate berechnet werden, oder dadurch, daß sie mit der vollen auch eingangsseitig an den Filtern 7, 8, 9 anliegenden Rate berechnet werden, wobei anschließend entsprechende Werte weggelassen werden. Die Abtastwerte der dezimierten Signale Y, U, V werden in einem Bildspeicher 10 zwischengespeichert. In einem Fernsehgerät mit Bild-im-Bildeinblendfunktion werden die Signale Y, U, V zeitrichtig für die Einblendung in ein von einem weiteren Videosignal geliefertes Hauptbild ausgelesen und zusammen mit diesem an einem Bildschirm dargestellt.

Beispielsweise erfolgt die Dezimierung des einzublendenden Bildes auf 1/N² seiner ursprünglichen Größe (z.B. N=3). Das digitalisierte Videosignal FB' wird mit der Abtastfrequenz f_{T} abgetastet. Um Bildstörungen aufgrund der Unterabtastung zu vermeiden, muß das Tiefpaßfilter 7 zur Erfüllung des Abtasttheorems eine Bandbegrenzung auf f_{T}/2N durchführen. Bei einem Format Y:U:V von 4:1:1 wird die Begrenzung durch Tiefpaßfilter 8, 9 auf eine vierfach niedrigere Frequenz, das heißt f_{T}/8N, durchgeführt. Eine weitere Dezimierung erfolgt in vertikale Richtung um den Faktor 3, indem nur jede dritte Zeile weiterverarbeitet wird.

In Figur 3 ist mit der Kurve 43 die maximal mögliche Durchlaßkennlinie für das Tiefpaßfilter 7 angegeben, wenn Bildstörungen vermieden werden sollen. Der Durchlaßbereich endet dort, wo der Farbanteil 42 im Frequenzspektrum des Videosignals beginnt, der um den Farbträger 41 herum unsymmetrisch moduliert ist. Wenn das Tiefpaßfilter 7 noch höhere Frequenzen innerhalb des Farbspektrums 42 passieren läßt, muß mit entsprechenden Bildstörungen im dezimierten Bild gerechnet werden.

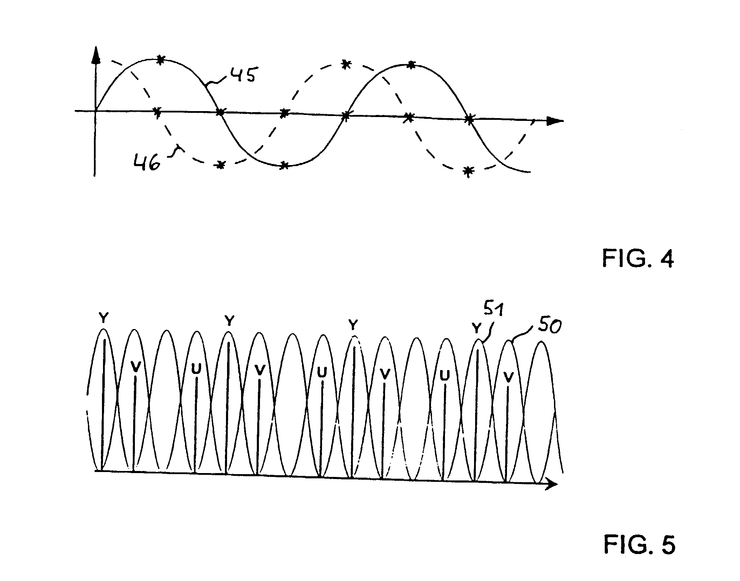

Für eine Realisierung mit farbträgergekoppelter Abtastung mit der Frequenz f_{T} ist die in Figur 2 gezeigte Vereinfachung möglich. Diese enthält eine Vorzeichenwechseleinrichtung 11, der das digitalisierte Videosignal FB' zugeführt wird. Die Einrichtung 11 wird mit der doppelten Farbträgerfrequenz gesteuert, das heißt ein Vorzeichenwechsel erfolgt mit doppelter Farbträgerfrequenz. Das von der Einrichtung 11 abgegebene Signal wird mittels eines Umschalters 12 entweder dem Tiefpaßfilter 8 oder dem Tiefpaßfilter 9 zugeführt. Die Umschalteinrichtung 12 wird mit vierfacher Farbträgerfrequenz umgetastet. Die zweifache und vierfache Farbträgerfrequenz werden von einer entsprechend modifizierten Farbträgerrückgewinnungseinrichtung 2' bereitgestellt. Wie in Figur 4 anhand des Verlaufs der um 90° phasenverschobenen Farbträger für die Farbsignalanteile U, V (Kurven 45 bzw. 46) eines PAL-Signals gezeigt ist, liegen die Abtastwerte der beiden Farbträger bei farbträgergekoppelter A/D-Wandlung bei den Werten +1, 0, -1 (normiert auf die Farbträgeramplitude). Während einer der Träger einen von Null verschiedenen Wert aufweist, ist der andere Träger Null. Dadurch wird die Umschaltung zwischen den beiden Chrominanzkanälen mittels des Umschalters 12 ermöglicht. Der Vorzeichenwechsel der jeweiligen Abtastwerte der Träger wird durch die Einrichtung 11 berücksichtigt.

In Figur 5 ist ein Spektrum eines Videosignals gemäß dem PAL-Standard längs der vertikalen Ortsfrequenzachse für den Idealfall dargestellt, daß keine vertikalen Bildfrequenzen enthalten sind, d. h. kein Helligkeits- oder Farbsprung in vertikaler Richtung vorliegt. Farb- und Helligkeitsveränderungen in horizontale Richtung sind hier unberücksichtigt. Durch je ein sogenanntes Kammfilter, das zwischen dem Tiefpaßfilter 8 und dessen ausgangsseitiger Unterabtastung und dem Speicher 10 angeordnet ist bzw. dem Tiefpaßfilter 9 und dessen ausgangsseitiger Unterabtastung und dem Speicher 10 angeordnet ist (in Figur 1 nicht dargestellt), kann der Farbschärfeneindruck erhöht werden. Das Kammfilter weist die in Figur 5 gezeigte "kammartige" Filtercharakteristik 50 auf. Es sorgt für eine Dämpfung des Luminanzsignalanteils Y in bezug auf vertikale Frequenzen. Kammfilter wirken als vertikale Tiefpaßfilter und werden als digitale Tiefpässe realisert, deren Verzögerungsglieder eine Verzögerung um eine Zeile bewirken. Im Gegensatz dazu sind die Tiefpässe 7, 8, 9 in bezug auf die Bildrichtung horizontal wirkende Tiefpässe.

Zweckmäßigerweise wird auch im Luminanzsignalpfad zwischen dem Tiefpaßfilter 7 und dessen ausgangsseitiger Unterabtastung und dem Eingang des Speichers 10 ein Kammfilter angeordnet. Dieses weist einen Frequenzgang 51 auf, durch den die im Luminanzpfad verbleibenden Chrominanzsignalanteile U, V gedämpft werden. Durch die Kammfilter wird neben der Verringerung des Übersprechens zwischen Luminanz und Chrominanz und umgekehrt gleichzeitig auch eine vertikale Bandbegrenzung durchgeführt, so daß bei der vertikalen Dezimierung Bildstörungen vermieden werden.

## Patentansprüche

1. Schaltungsanordnung zur Farbdekodierung und Dezimierung für ein Videosignal mit einem Farbanteil (42), insbesondere zur Bild-im-Bildeinblendung, enthaltend:
- eine Analog-Digital-Wandlereinrichtung (1), der das Videosignal (FB) zuführbar ist,
- Mittel (2, 2') zur Rückgewinnung eines an die Farbträgerfrequenz gekoppelten Trägers aus dem Videosignal (FB, FB'),
- Mittel (5, 6; 11, 12) zur multiplikativen Verknüpfung des rückgewonnenen Trägers mit dem digitalisierten Videosignal (FB'), durch die eine erste Signalkomponente und eine zweite Signalkomponente erzeugt werden,
- erste Tiefpaßfiltermittel (7) mit einem Durchlaßbereich, der unterhalb des Farbanteils (42) im Frequenzspektrum des Videosignals (FB) liegt, zur Filterung des digitalisierten Videosignals (FB'), die eingangsseitig unmittelbar mit einem Ausgang der Analog-Digital-Wandlereinrichtung (1) verbunden sind und durch die ein Luminanzsignalanteil (Y) erzeugt wird,
- zweite Tiefpaßfiltermittel (8) zur Filterung der ersten Signalkomponente, so daß ein erster Chrominanzsignalanteil (U) erzeugt wird, die eingangsseitig unmittelbar mit den Mitteln (5, 6; 11, 12) zur multiplikativen Verknüpfung verbunden sind,
- dritte Tiefpaßfiltermittel (9) zur Filterung der zweiten Signalkomponente, durch die ein zweiter Chrominanzsignalanteil (V) erzeugt wird, die eingangsseitig unmittelbar mit den Mitteln (5, 6; 11, 12) zur multiplikativen Verknüpfung verbunden sind,
- wobei die Abtastwerteraten der von den Tiefpaßfiltermitteln (7, 8, 9) jeweils erzeugten Ausgangssignale (Y, U, V) gegenüber den Abtastwerteraten ihrer jeweiligen Eingangssignale abhängig vom Grad der Dezimierung verringert sind.

2. Schaltungsanordnung nach Anspruch 1,
**dadurch gekennzeichnet,** daß
die Analog-Digital-Wandlereinrichtung (1) derart ausgeführt ist, daß die Abtastung des Videosignals (FB) gekoppelt an die Farbträgerfrequenz durchgeführt wird und daß die Mittel (5, 6; 11, 12) zur multiplikativen Verknüpfung des rückgewonnenen Trägers mit dem digitalisierten Videosignal (FB') eine erste Einrichtung (11) umfassen, die mit der doppelten Farbträgerfrequenz gesteuert wird und auf diese Weise das Vorzeichen des digitalisierten Videosignals (FB') mit doppelter Farbträgerfrequenz ändert und eine Umschalteinrichtung (12), die mit der vierfachen Farbträgerfrequenz umgetastet wird und durch die das Ausgangssignal der ersten Einrichtung (11) abwechselnd an die zweiten oder dritten Tiefpaßfiltermittel (8 bzw. 9) führbar ist, wobei die zweifache und vierfache Farbträgerfrequenz von den Mitteln (2') zur Rückgewinnung des an die Farbträgerfrequenz gekoppelten Trägers bereitgestellt werden.

3. Schaltungsanordnung nach Anspruch 2,
**dadurch gekennzeichnet,** daß
die erste Einrichtung (11) von einem Signal mit der doppelten Farbträgerfrequenz gesteuert wird und die Umschalteinrichtung (12) von einem Signal mit der vierfachen Farbträgerfrequenz.

4. Schaltungsanordnung nach einem der Ansprüche 1 bis 3,
**dadurch gekennzeichnet,** daß
das Videosignal (FB) einen Luminanzspektralanteil und einen auf einem Farbträger aufmodulierten Chrominanzspektralanteil enthält und daß das erste Tiefpaßfiltermittel (7) einen spektralen Durchlaßbereich unterhalb des Chrominanzspektralanteils aufweist und sonst einen spektralen Sperrbereich.

5. Schaltungsanordnung nach Anspruch 4,
**dadurch gekennzeichnet,** daß
die Größe des im Videosignal (FB) enthaltenen Bildes um den Faktor N² dezimiert ist und daß die Abtastwerterate des Ausgangssignals (Y) des ersten Tiefpaßfiltermittels (7) den Faktor 1/N² derjenigen von dessen Eingangssignal beträgt.

6. Schaltungsanordnung nach Anspruch 4 oder 5,
**dadurch gekennzeichnet,** daß
die Abtastwerteraten für die Chrominanzsignalanteile den Faktor 1/M Mal der Abtastwerterate für den Luminanzsignalanteil betragen und daß die jeweiligen Durchlaßbereiche der zweiten und dritten Tiefpaßfiltermittel (8, 9) im wesentlichen den Faktor 1/M Mal den Durchlaßbereich des ersten Tiefpaßfiltermittels (7) betragen.

7. Schaltungsanordnung nach einem der Ansprüche 1 bis 6,
**dadurch gekennzeichnet,** daß
die Tiefpaßfiltermittel (7, 8, 9) jeweils horizontal wirkende Tiefpässe umfassen.

8. Schaltungsanordnung nach einem der Ansprüche 1 bis 7,
**dadurch gekennzeichnet,** daß
den Tiefpaßfiltermitteln (7, 8, 9) jeweils weitere, vertikal wirkende Tiefpaßfiltermittel nachgeschaltet sind.

9. Schaltungsanordnung nach Anspruch 8,
**dadurch gekennzeichnet,** daß
die vertikal wirkenden Tiefpaßfiltermittel jeweils Kammfilterchrakteristik aufweisen.

10. Fernsehgerät enthaltend eine Schaltungsanordnung nach einem der Ansprüche 1 bis 9, bei dem an einem Bildschirm ein von einem weiteren Videosignal erzeugtes erstes Bild und ein durch die Schaltungsanordnung dezimiertes, in das erste Bild eingeblendetes zweites Bild dargestellt wird.

## Claims

1. Circuit arrangement for colour coding and decimation for a video signal having a colour component (42), in particular for picture-in-picture insertion, containing:
- an analog-to-digital converter device (1), to which the video signal (FB) can be fed,
- means (2, 2') for recovering from the video signal (FB, FB') a carrier coupled to the colour subcarrier frequency,
- means (5, 6; 11, 12) for the multiplicative combination of the recovered carrier with the digitized video signal (FB'), by means of which a first signal component and a second signal component are generated,
- first low-pass filter means (7) having a passband which lies below the colour component (42) in the frequency spectrum of the video signal (FB), for the filtering of the digitized video signal (FB'), which means are connected, on the input side, directly to an output of the analog-to-digital converter device (1) and generate a luminance signal component (Y),
- second low-pass filter means (8) for the filtering of the first signal component, thereby generating a first chrominance signal component (U), which means are connected, on the input side, directly to the means (5, 6; 11, 12) for multiplicative combination,
- third low-pass filter means (9) for the filtering of the second signal component, which means generate a second chrominance signal component (V) and are connected, on the input side, directly to the means (5, 6; 11, 12) for multiplicative combination,
- the sampling rates of the output signals (Y, U, V) respectively generated by the low-pass filter means (7, 8, 9) are reduced relative to the sampling rates of their respective input signals, as a function of the degree of decimation.

2. Circuit arrangement according to Claim 1,
characterized in that
the analog-to-digital converter device (1) is designed in such a way that the sampling of the video signal (FB) is carried out in a manner coupled to the colour subcarrier frequency, and in that the means (5, 6; 11, 12) for multiplicative combination of the recovered carrier with the digitized video signal (FB') comprise a first device (11), which is controlled at twice the colour subcarrier frequency and, in this way, changes the sign of the digitized video signal (FB') at twice the colour subcarrier frequency, and a changeover device (12), which is sampled at four times the colour subcarrier frequency and enables the output signal of the first device (11) to be passed alternately to the second or third low-pass filter means (8 or 9), the double and quadruple colour subcarrier frequencies being provided by the means (2') for recovering the carrier coupled to the colour subcarrier frequency.

3. Circuit arrangement according to Claim 2,
characterized in that
the first device (11) is controlled by a signal at twice the colour subcarrier frequency and the changeover device (12) by a signal at four times the colour subcarrier frequency.

4. Circuit arrangement according to one of Claims 1 to 3,
characterized in that
the video signal (FB) contains a luminance spectral component and a chrominance spectral component, which is modulated on a colour subcarrier, and in that the first low-pass filter means (7) has a spectral passband below the chrominance spectral components, and otherwise a spectral stop band.

5. Circuit arrangement according to Claim 4,
characterized in that
the size of the picture contained in the video signal (FB) is decimated by the factor N², and in that the sampling rate of the output signal (Y) of the first low-pass filter means (7) amounts to the factor 1/N² of that of the input signal of said low-pass filter means.

6. Circuit arrangement according to Claim 4 or 5,
characterized in that
the sampling rates for the chrominance signal components amount to the factor 1/M times the sampling rate for the luminance signal component, and in that the respective passbands of the second and third low-pass filter means (8, 9) essentially amount to the factor 1/M times the passband of the first low-pass filter means (7).

7. Circuit arrangement according to one of Claims 1 to 6,
characterized in that
the low-pass filter means (7, 8, 9) each comprise horizontally acting low-pass filters.

8. Circuit arrangement according to one of Claims 1 to 7,
characterized in that
further, vertically acting low-pass filter means are connected downstream of each of the low-pass filter means (7, 8, 9).

9. Circuit arrangement according to Claim 8,
characterized in that
the vertically acting low-pass filter means each have a comb filter characteristic.

10. Television set containing a circuit arrangement according to one of Claims 1 to 9, in which a first picture, generated by a further video signal, and a second picture, decimated by the circuit arrangement and inserted into the first picture, are displayed on a screen.

## Revendications

1. Circuit pour le décodage et la décimation de chrominance d'un signal vidéo ayant une composante de chrominance (42), notamment pour l'incrustation d'une image dans l'image, comportant :
- un dispositif convertisseur analogique-numérique (1) auquel peut être envoyé le signal vidéo (FB),
- des moyens (2, 2') qui sont destinés à récupérer à partir du signal vidéo (FB, FB') une porteuse couplée à la fréquence de sous-porteuse de chrominance,
- des moyens (5, 6 ; 11, 12) qui sont destinés à combiner par multiplication la porteuse récupérée et le signal vidéo numérisé (FB') et qui produisent une première composante de signal et une deuxième composante de signal,
- des premiers moyens de filtrage passe-bas (7), qui ont une bande passante située au-dessous de la composante de chrominance (42) dans le spectre fréquentiel du signal vidéo (FB), qui sont destinés à filtrer le signal vidéo numérisé (FB'), qui sont reliés en entrée directement à une sortie du dispositif convertisseur analogique-numérique (1) et par lesquels une composante de signal de luminance (Y) est produite,
- des deuxièmes moyens de filtrage passe-bas (8), qui sont destinés à filtrer la première composante de signal de manière à produire une première composante de signal de chrominance (U) et qui sont reliés en entrée directement aux moyens (5, 6 ; 11, 12) destinés à la combinaison par multiplication,
- des troisièmes moyens de filtrage passe-bas (9), qui sont destinés à filtrer la deuxième composante de signal de manière à produire une deuxième composante de signal de chrominance (V) et qui sont reliés en entrée directement aux moyens (5. 6 ; 11, 12) destinés à la combinaison par multiplication,
- les taux de valeurs échantillonnées des signaux de sortie (Y, U, V) respectivement produits par les moyens de filtrage passe-bas (7, 8, 9) étant réduits par rapport aux taux de valeurs échantillonnées de leurs signaux d'entrée respectifs en fonction du degré de la décimation.

2. Circuit selon la revendication 1,
caractérisé par le fait que le dispositif convertisseur analogique-numérique (1) est conçu de telle sorte que l'échantillonnage du signal vidéo (FB) est effectué avec un couplage à la fréquence de sous-porteuse de chrominance et que les moyens (5, 6 ; 11, 12) destinés à la combinaison par multiplication de la sous-porteuse récupérée et du signal vidéo numérisé (FB') comprennent un premier dispositif (11) qui est commandé avec le double de la fréquence de sous-porteuse de chrominance et qui modifie de cette manière avec le double de la fréquence de sous-porteuse de chrominance le signe du signal vidéo numérisé (FB') et un dispositif de commutation (12) qui est commuté avec le quadruple de la fréquence de sous-porteuse de chrominance et par lequel le signal de sortie du premier dispositif (11) peut être envoyé en alternance aux deuxièmes moyens de filtrage passe-bas (8) ou aux troisièmes moyens de filtrage passe-bas (9), le double et le quadruple de la fréquence de sous-porteuse de chrominance étant fournis par les moyens (2') destinés à récupérer la sous-porteuse couplée à la fréquence de sous-porteuse de chrominance.

3. Circuit selon la revendication 2,
caractérisé par le fait que le premier dispositif (11) est commandé par un signal ayant le double de la fréquence de sous-porteuse de chrominance et le dispositif de commutation (12) est commandé par un signal ayant le quadruple de la fréquence de sous-porteuse de chrominance.

4. Circuit selon l'une des revendications 1 à 3,
caractérisé par le fait que le signal vidéo (FB) contient une composante spectrale de luminance et une composante spectrale de chrominance modulée sur une sous-porteuse de chrominance et que les premiers moyens de filtrage passe-bas (7) ont une bande passante spectrale au-dessous de la composante spectrale de chrominance et sinon une bande éliminée spectrale.

5. Circuit selon la revendication 4,
caractérisé par le fait que la dimension de l'image contenue dans le signal vidéo (FB) est décimée d'un facteur N2 et que le taux de valeurs échantillonnées du signal de sortie (Y) des premiers moyens de filtrage passe-bas (7) vaut un facteur 1/N2 de celui de leur signal d'entrée.

6. Circuit selon la revendication 4 ou 5,
caractérisé par le fait que les taux de valeurs échantillonnées pour les composantes de signal de chrominance valent le facteur 1/M fois le taux de valeurs échantillonnées pour la composante de signal de luminance et que les bandes passantes respectives des deuxièmes et troisièmes moyens de filtrage passe-bas (8, 9) valent globalement le facteur 1/M fois la bande passante des premiers moyens de filtrage passe-bas (7).

7. Circuit selon l'une des revendications 1 à 6,
caractérisé par le fait que les moyens de filtrage passe-bas (7, 8, 9) comprennent à chaque fois des filtres passe-bas agissant horizontalement.

8. Circuit selon l'une des revendications 1 à 7,
caractérisé par le fait qu'il est branché du côté aval de chacun des moyens de filtrage passe-bas (7, 8, 9) d'autres moyens de filtrage passe-bas agissant verticalement.

9. Circuit selon la revendication 8,
caractérisé par le fait que les moyens de filtrage passe-bas agissant verticalement ont chacun une caractéristique de filtre-peigne.

10. Appareil de télévision contenant un circuit selon l'une des revendications 1 à 9, dans lequel une première image produite par un autre signal vidéo est représentée sur un écran et une deuxième image décimée par le circuit et à incruster dans la première image est représentée sur l'écran.
